# EUROPEAN PATENT APPLICATION

(11) **EP 2 894 324 A2**
(43) Date of publication of application: **15.07.2015**
(21) Application number: 15150730.8
(22) Date of filing: 12.01.2015
(51) Int. Cl.: F02M 21/02, F02M 63/02, F02M 55/02, F02D 19/02

(54) **Gaseous fuel feeding system**

(30) Priority: 14.01.2014 GB 201400577
(71) Applicant: Caterpillar Motoren GmbH & Co. KG, 24159 Kiel (DE)
(72) Inventor: Herold, Hendrik, 24159 Kiel (DE); Vlaskos, Ioannis, 5234 Villingen (CH); Marchi, Andrea, 73525 Schwäbisch Gmünd (DE)
(74) Representative: Kramer Barske Schmidtchen Patentanwälte PartG mbB

(57) **Abstract**

A gaseous fuel feeding system (100) for feeding a first cylinder bank (12) and a second cylinder bank (14) of an internal combustion engine (10) with gaseous fuel is disclosed. For feeding the first cylinder bank (12), a first duct line (120) comprises a first inner volume (126) extending from a first inlet end (110) for receiving gaseous fuel to a first opposing end (124) of the first duct line (120) and, for feeding the second cylinder bank (14), a second duct line (140) comprises a second inner volume (146) extending from a second inlet end (110) for receiving gaseous fuel to a second opposing end (144) of the second duct line (140). For damping, for example peak pressure and pressure fluctuations, within the gaseous fuel feeding system (100), a duct damping element (150) has at least one duct damping orifice (152) that fluidly connects the first inner volume (126) of the first duct line (120) and the second inner volume (146) of the second duct line (140).

## Description

### Technical Field

The present disclosure relates to operating internal combustion engines with gaseous fuel and more particularly to feeding gaseous fuel to respective cylinder units of an internal combustion engine.

### Background

Various configurations of internal combustion engines for operation with gaseous fuel are known. For example, there are internal combustion engines specifically optimized to be only run with gaseous fuel. Ignition concepts may be pre-combustion chamber based spark-ignited combustion. Moreover, there are dual or multi fuel engine configurations that allow operating the engine with gaseous fuel as well as liquid fuel types. In those configurations, ignition for liquid fuel operation may be performed by use of the liquid fuel injection system used for liquid fuel operation or use of a specific liquid fuel injection system for gaseous fuel operation.

Internal combustion engines for operation with gaseous fuel usually comprise a gaseous fuel feeding system usually mounted to the engine block and feeding the respective cylinder units with gaseous fuel. During operation, pressure fluctuations can build up within the gaseous fuel feeding system and affect the operation of the engine.

Usually, the reduced energy content per volume of gaseous fuel - in comparison to liquid fuel - results in larger diameters within the gaseous fuel feeding system to deliver the same amount of energy for the combustion. In comparison to liquid fuel systems such as common rail systems, the fuel pressure of gaseous fuel in the gaseous fuel feeding system is low, usually in the range from, for example, 2 bar to 6 bar for single-stage charging and up to 12 bar and more for two-stage charging. In addition, gaseous fuel is compressible. One or all of the above aspects may affect the pressure fluctuation within a gaseous fuel feeding system during operation.

The present disclosure is directed, at least in part, to improving or overcoming one or more aspects of prior systems.

### Summary of the Disclosure

In a first aspect, a gaseous fuel feeding system for feeding a first cylinder bank and a second cylinder bank of an internal combustion engine with gaseous fuel for feeding at least one cylinder bank of an internal combustion engine with gaseous fuel may comprise, for feeding the first cylinder bank, a first duct line comprising a first inner volume extending from a first inlet end for receiving gaseous fuel to a first opposing end of the first duct line, and for feeding the second cylinder bank, a second duct line comprising a second inner volume extending from a second inlet end for receiving gaseous fuel to a second opposing end of the second duct line, and a duct damping element having at least one duct damping orifice and fluidly connecting the first inner volume of the first duct line and the second inner volume of the second duct line.

In a second aspect, a gaseous fuel feeding system for feeding at least one cylinder bank of an internal combustion engine with gaseous fuel may comprise, for feeding the cylinder bank, a duct line comprising an inner volume extending from a first inlet end for receiving gaseous fuel to an opposing end of the duct line, a plurality of branch lines that each are configured to fluidly connect the inner volume with a respective gas admission valve of the cylinder bank, and at least one branch damping element with a branch inlet orifice, wherein the branch inlet orifice fluidly connects the respective inner volume to a branch inner volume of the at least one branch line.

In some embodiments, further developments of features of the first aspect as recited, for example, in the dependent claim may be applicable also to the second aspect recited above, be it in combination or alone.

Other features and aspects of this disclosure will be apparent from the following description and the accompanying drawings.

### Brief Description of the Drawings

Fig. 1 is a perspective view of a section of an exemplary internal combustion engine operable with gaseous fuel whereby several outer elements of the internal combustion engine are not shown for illustration purposes;
Fig. 2 is a cut-view of an exemplary cylinder unit of a spark-ignited internal combustion engine;
Fig. 3 is a perspective view of a section of the internal combustion engine of Fig. 1 for illustration of the feeding of gaseous fuel to the cylinder units;
Fig. 4 is a top view of an exemplary loop rail design of a gaseous fuel feeding system;
Fig. 5 is a schematic illustration of a duct damping element with a duct damping orifice; and
Fig. 6 is a schematic illustration of a branch damping element with a branch inlet orifice.

### Detailed Description

The following is a detailed description of exemplary embodiments of the present disclosure. The exemplary embodiments described herein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure may be based in part on the realization that with increasing cylinder number pressure fluctuations may adversely affect the engine operation as the amount of gaseous fuel provided to the individual cylinder units may vary over time and from cylinder to cylinder. It was further realized that providing additional volume - considered as damping volume - at the gaseous fuel feeding system may reduce the pressure fluctuations. In particular, such a damping volume is proposed herein to be provided by connecting the gaseous fuel feeding lines (herein also referred to as main duct lines or simply duct lines), when multiple banks of cylinders are present. As an example, gaseous fuel feeding lines in, for example, a V-configuration can be fluidly connected at the ends opposing the gaseous fuel supply port.

In view of the characteristics of the gaseous fuel and the diameters of the gaseous fuel feeding lines, it was further realized that the pressure fluctuations may be reduced when connecting the respective gaseous fuel feeding lines via a duct damping element. The duct damping element provides for a reduction in diameter, for example, by providing a duct damping orifice. The duct damping element may be integrally formed as part of a duct. In some embodiments, the duct damping element is a separate unit fluidly connected to the duct lines.

Such a configuration is considered a mechanical solution to essentially overcome or at least to reduce inter alia cycle-by-cycle peak pressure variations. Moreover, for example, the spark ignition may essentially not be affected and the air fuel ratio may be appropriately set.

Moreover, the present disclosure may be based in part on the realization that alternatively or additionally branch inlet orifices are provided at the transition of the main duct lines (gaseous fuel feeding lines) to the branch inlet lines, which pass the gaseous fuel from the main duct lines to the gas admission valves.

With the herein disclosed configurations, the peak pressure fluctuations within the gaseous fuel feeding systems may be reduced such that the pressure presented at the various cylinder units may be more constant and the admitted amount of gaseous fuel to the respective cylinder units may be more uniform in time as well as more uniform from cylinder unit to cylinder unit.

Due to the compressibility of the gaseous fuel, the positioning of simple mechanical structures such as orifices, which are specifically adapted, for example in size and/or number, to the respective volumes, allows addressing pressure fluctuations. As described herein, orifices reduce the flow diameter of a gaseous fuel line. This may be, for example, by a single opening such as a circular opening within a circular-cross-section duct. In some embodiments, the required flow diameter may be provided by a set of orifices within one plane that - in combination of their opening areas - provide for the desired damping effect. The size of a rack between openings may be, for example, small in comparison to the the area of the opening such that the influence on the flow may be small. In some embodiments, orifices may be provided along the gaseous fuel line to provide for the desired damping effect.

In contrast to closed ends in the gas dynamic of gaseous fuel feeding systems (which may produce wave reflections leading to resonances and wave amplification), the disclosed gaseous fuel feeding system avoides or at least reduces those effects by joining the ends. To further prevent that the transmitted wave could produce a returning wave amplification in the next bank, an orifice is proposed in the middle of the new duct junction. The size of the orifice may be set to produce desired dumping effect for both transmitted and reflected waves.

Simulated tests showed for an orifice size of, for example, 20% of the diameter of the duct reduced cycle to cycle variation from about 4.2% to about 1.5%, and a decrease of pressure fluctuation and also a decrease of inlet supply pressure. Thus, an optimum orifice size may be based on a tradeoff between high pressure wave damping and low inlet pressure supply. As a consequence of the a higher pressure wave stability the simulated mass flow rate also resulted more uniform during the opening period of the gas admission valve.

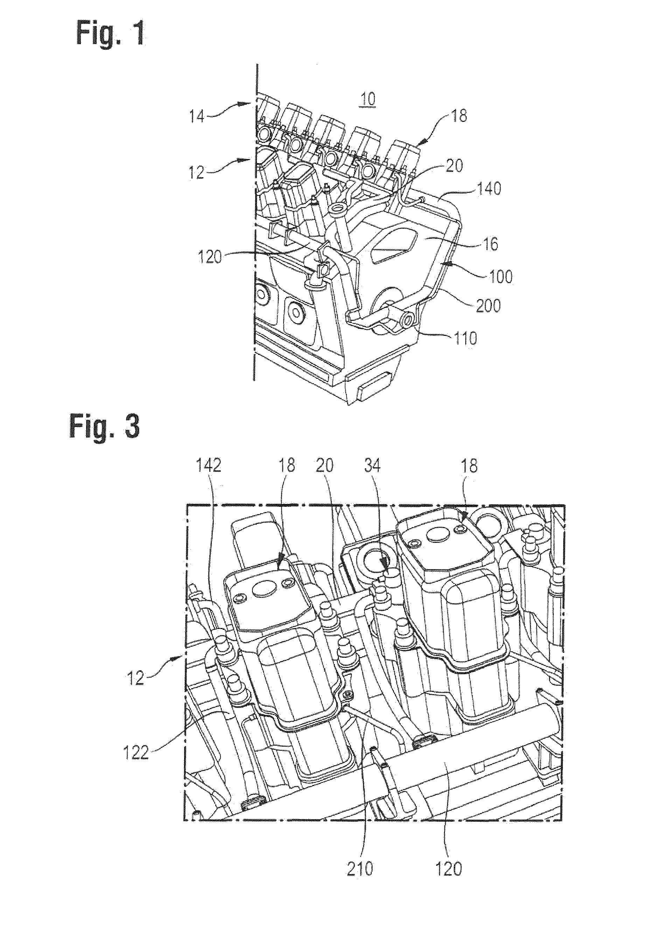

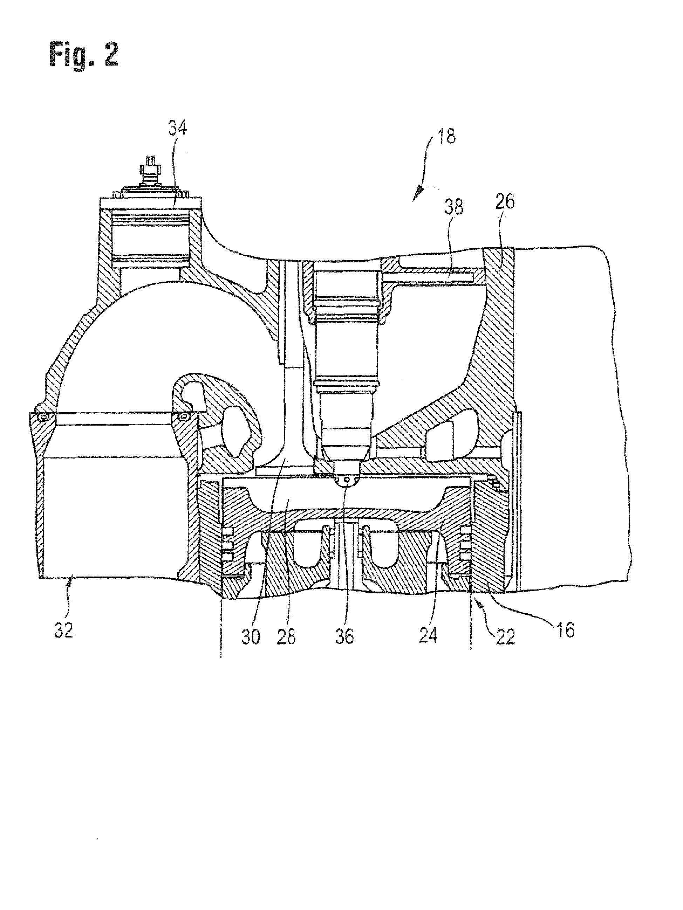

Referring to the drawings, Fig. 1 schematically illustrates in a perspective view an exemplary embodiment of an engine 10 with two cylinder banks of cylinder units. Fig. 2 shows a cut-view of an exemplary cylinder unit. Fig. 3 then shows a section of Fig. 1 in a different perspective view for illustration of feeding a gaseous fuel to the cylinder units.

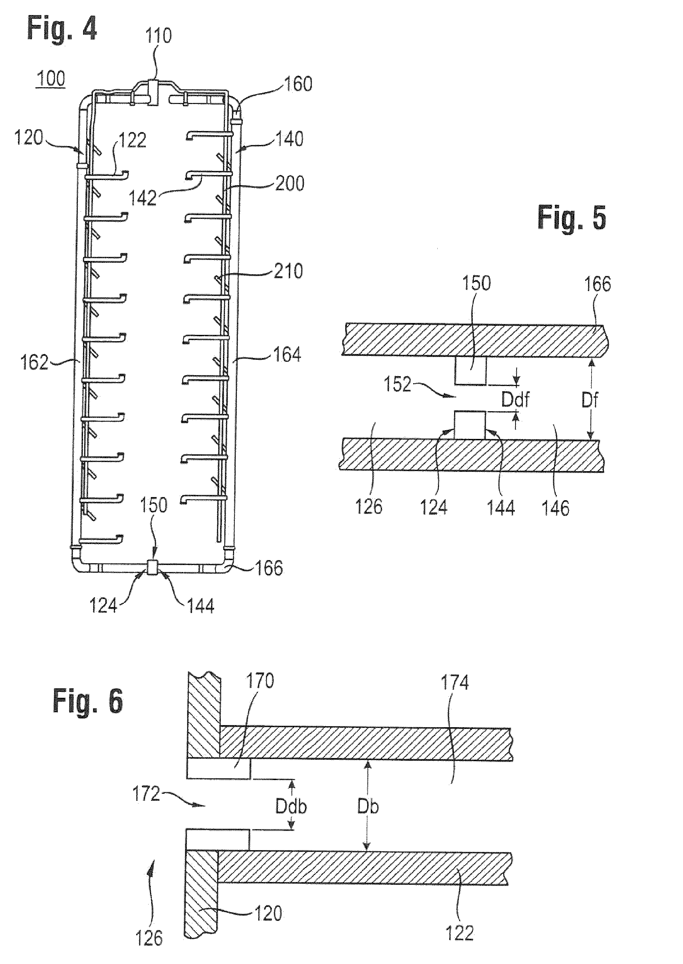

Furthermore, exemplary structural configurations of a gaseous fuel feeding system 100 of internal combustion engine 10 are illustrated in connection with Figs. 4 to 6. Specifically, Fig. 4 shows a top view of an exemplary loop rail design of a gaseous fuel feeding system. Fig. 5 illustrates a duct damping element 150 with a duct damping orifice and Fig. 6 illustrates a branch damping element 170 with a branch inlet orifice, exemplarily positioned at the transition from the main duct line to a branch inlet line.

Referring to Fig. 1, engine 10 is configured with two cylinder banks 12, 14 that are mounted to an engine block 16 in V-configuration. Cylinder banks 12, 14 include cylinder units 18 that are respectively aligned in series for each cylinder bank.

Engine 10 is configured for operation with gaseous fuel which is provided to the respective cylinder units 18 via a gaseous fuel feeding system 100. Moreover, engine 10 includes an air system and an exhaust gas system (not explicitly shown) as well as a cooling system including cooling pipes 20.

An example of engine 10 may be a natural gas, spark-ignited, V-style turbocharged and, for example, after cooled engine. For such an engine, an exemplary cross-section of cylinder unit 18 is shown in Fig. 2.

For example as shown in Fig. 2, cylinder unit 18 includes a cylinder 22 that is integrated in engine block 16. In cylinder 22, a piston 24 is slidably disposed. A cylinder head 26 is associated with cylinder 22 and mounted to engine block 16. Cylinder head 26 and piston 24 define a main combustion chamber 28.

Fig. 2 illustrates further an inlet valve 30 controlling the inflow of a charge air/gaseous fuel mixture to main combustion chamber 28. Charge air is provided via a charge air inlet 32 and gaseous fuel is mixed to the charge air via a gas admission valve 34. Gas admission valve is fed with the gaseous fuel via gaseous fuel feeding system 100 (not shown in Fig. 2).

The configuration of Fig. 2 further illustrates the presence of a pre-combustion chamber 36 for spark-ignition. In pre-combustion chamber 36, a small amount of gaseous fuel is spark-ignited, which then ignites the combustion within main combustion chamber 28 via openings within the pre-combustion chamber 36. Pre-combustion chamber 36 is itself fed with gaseous fuel received via a gaseous fuel ignition system 38.

Exhaust gas is guided out of main combustion chamber 28 via an exhaust opening controlled by an exhaust valve (not shown). Cylinder unit 18 may include multiple intake and exhaust openings/intake and exhaust valves as well as a specifically configured cooling system provided within engine block 16 as well as cylinder head 26.

In general, engine 10 may include a series of valve actuation assemblies (not shown in Fig. 2) for opening and closing the respective valves. The valve actuation assemblies may be based on rocker arm technology, for example.

The combustion within main combustion chamber 28 drives via piston 24, a connecting rod, an eccentric crank pin (both not shown), a crank shaft (not shown) of engine 10.

Engine 10 may be any other type of internal combustion engine such as, for example, a dual fuel powered engine or a liquid fuel-ignited gaseous fuel engine. However, for the gaseous fuel feeding system with a duct damping orifice as disclosed herein, engine types are directed to engine types comprising multiple banks (or banch sections), each being provided with gaseous fuel via a respective duct line such that it is possible to interconnect the respective inner volumes of those duct lines for damping purposes. Primary configurations may include the V-configuration as shown in Fig. 1 but also other configurations such as in-line configurations with respective duct sections may be applicable, for example, supplied at two or more gasous fuel supply ports with gaseous fuel. However, for the gaseous fuel feeding system with a branch damping orifice as disclosed herein, engine types may not need multiple banks (or banch sections).

In connection with Figs. 3 to 6, gaseous fuel feeding system 100 is explained in more detail.

Referring to Fig. 3, the sectional perspective view illustrates the feeding of gaseous fuel to respective cylinder units 18. In the foreground of Fig. 3, two cylinder units 18 of cylinder bank 12 are shown. Along the series of cylinder units 18, a first duct line 120 extends as shown also in Fig. 1. First duct line 120 is fluidly connected to a gaseous fuel tank system (not shown). The duct line usually has a circular cross-section with a diameter in the range from, for example, 100 mm to 300 mm, such as, for example, 150 mm, 200 mm, or 250 mm.

For each cylinder unit 18, a branch line 122 fluidly connects duct line 120 with gas admission valve 34. Gas admission valve 34 allows to pass through the respective amount of gaseous fuel to intermix with the charge air from the charge air system (not shown). In some embodiments, branch line 122 is configured as a flexible pipe that is flanged to duct line 120 and gas admission valve 34 at the respective ends. Branch line 122 usually has a circular cross-section with a diameter in the range from 10 mm to 150 mm, for example, in the range from 30 mm to 100 mm, such as, for example, 50 mm, 60 mm, or 70 mm.

Moreover, an ignition gaseous fuel system 200 is shown in Fig.1. Ignition gaseous fuel system 200 comprises two smaller pipes extending along first duct line 120 and second duct line 140 and respective distribution lines 210 for providing respective pre-combustion chambers 36 with gaseous fuel. In Fig. 3, the small pipe of ignition gaseous fuel system 200 is covered by first duct line 120.

Referring to Fig. 4's top view, gaseous fuel feeding system 100 includes gaseous fuel inlet port 110 and fluidly connected thereto, first duct line 120 for feeding first cylinder bank 12 and a second duct line 140 for feeding second cylinder bank 14. Gaseous fuel inlet port 110 is connectable to a gaseous fuel supply system providing, for example, natural gas at a pressure in the range from, for example, 3 bar to 6 bar for a single stage charged engine.

Furthermore, Fig. 4 shows, for example, for each of first duct line 120 and second duct line 140 a respective sequence of branch lines 122, 142 for providing the gaseous fuel to the gas admission valves.

Moreover, Fig. 4 shows ignition gaseous fuel system 200 comprising smaller diameter lines extending parallel to first duct line 120 and second duct line 140, respectively. Furthermore, distribution lines 210 are schematically illustrated. Distribution lines 210 provide respective pre-combustion chambers 36 with gaseous fuel. In Fig. 3, the smaller diameter line of ignition gaseous fuel system 200 is covered by first duct line 120.

First duct line 120 has a first inner volume 126 extending from a first inlet (here gaseous fuel inlet port 110) to a first opposing end 124, which in Fig. 4 is provided at duct damping element 150. Similarly, second duct line 140 comprises a second inner volume 146 extending from a second inlet end (here also gaseous fuel inlet port 110) to a second opposing end 144 similarly positioned at the other side of duct damping element 150. First duct line 120 and second duct line 140 are fluidly connected at their respective opposing ends 124, 144 via duct damping element 150. In other words, Fig. 4 shows a loop rail design with duct-ends connected by an orifice.

As exemplarily illustrated in Fig. 4, a loop rail design of gaseous fuel feeding system 100 may include a structure based on four pipe sections: pipe section 160 including gaseous fuel inlet port 110 and a fork configuration, two parallel extending duct rail sections 162, 164 respectively including flange configurations for mounting branch lines 122, 142, and a connection section 166 comprising duct damping element 150. Such a modular loop rail design divided in four sections allows simple mounting of gaseous fuel feeding system 100.

Fig. 5 illustrates schematically the arrangement of duct damping element 150 within connection section 166. Specifically, duct damping element 150 comprises a duct damping orifice 152. Orifice 152 is, for example, circularly shaped with a diameter Ddf. Duct damping orifice 152 fluidly connects first inner volume 126 of first duct line 120 and second inner volume 146 of second duct line 140 for exchanging gaseous fuel in case of a pressure difference, which, for example, was generated by a pressure wave in one of the duct lines. Accordingly, a flow through of gaseous fuel through duct damping orifice 152 reduces the potential reflection at the opposing end 124, 144 of a pressure fluctuation, thereby damping pressure fluctuations within first duct line 120 and second duct line 140.

In general, an area of duct damping orifice 152 is adapted, for example, to the size of the respective first and second inner volumes 126, 146. In some embodiments, it is adapted to the size of the cross-section. For example, first duct line 120 and/or second duct line 140 may have a circular cross section with duct line diameter Df and duct damping orifice 152 may also be circular with damping orifice diameter Ddf being set in the range from 5 % to 50 %, for example, in the range from 15 % to 25 % such as 19%, 20 %, 21 %, or 22 % of duct line diameter Df. For circular as well as non-circular orifices, an area of duct damping orifice 152 may be in the range from 0.2 % to 25 %, for example, in the range from 2 % to 6 % such as 3.5 %, 4 %, 4.5 %, or 5 % of the cross section area of first and/or second duct line 120, 140.

Fig. 6 illustrates the transition area from first duct line 120 to an exemplary branch line 122. At the transition, a branch damping element 170 with a branch inlet orifice 172 is provided. Branch damping element 170, in particular branch inlet orifice 172, fluidly connects the respective first or second inner volume 126, 146 to a branch inner volume 174 of the respective branch line 122, 142.

In some embodiments, first duct line 120 and/or second duct line 140 have a circular cross section with a duct line diameter Df and at least one branch inlet line of the pluralities of branch lines 122, 142 has a circular cross section with a branch inlet line diameter Ddb in the range from 45 % to 75 %, for example, in the range from 50 % to 65 % such as 54 %, 55 %, 56 %, or 57 % of duct line diameter Df.

In some embodiments, the size of branch inlet orifice 172 is adapted to the size of the cross-section of the branch line. For example, at least one branch line of the pluralities of branch lines 122, 142 may have a circular cross section with a branch line diameter Db and branch inlet orifice 172 is circular with a branch inlet orifice diameter Ddb in the range from 15 % to 65 %, for example, in the range from 25 % to 50 % such as 34 %, 35 %, 36 %, or 37 % of branch line diameter Db.

For circular as well as non-circular orifices, the area of branch inlet orifice 172 may be in the range from 2 % to 45 %, for example, in the range from 6 % to 25 % such as 11 %, 12 %, 13 %, or 14 % of the cross section area of the respective branch line 122, 142.

While Fig. 6 illustrates branch inlet orifice 172 positioned close to the duct line, in some embodiments, a branch inlet orifice may in addition or alternatively be positioned upstream of gas admission valve 34.

As it was realized that the presence of the damping elements at specific locations with a specific size of the orifices affects the pressure characteristic within the first duct line 120 and the second duct line 140, varying the diameter of duct damping orifice 152 and/or the diameter of the branch inlet orifice 172 may allow the identification of an optimized configuration with respect to pressure fluctuations. In particular, it may be applied to optimize the design in order to reduce any mass flow rate variation within the cylinders and pressure fluctuation preferably without introducing the requirement of a higher supply pressure.

### Industrial Applicability

The internal combustion engine disclosed herein may include additional features that are not shown explicitly in the drawings such as air systems, cooling systems, peripheries, drivetrain components, turbochargers, etc. For the purposes of the present disclosure, the internal combustion engine may be a four-stroke gaseous fueled engine. Gaseous fuel for the internal combustion engines may include natural gas, a combination of natural gas and another gaseous fuel, landfill gas, digester gas, fermenter gas, pyrolysis gas and the like.

One skilled in the art will recognize, however, that the internal combustion may be any type of engine (internal combustion, turbine, gas, diesel, gaseous fuel, natural gas, propane, etc.) that would use a gaseous fuel feeding system as described herein such as, for example, a spark ignition engine utilizing a pre-combustion chamber as illustrated in Fig. 2. Furthermore, the internal combustion engine may be of any size, with any number of cylinder units arranged within cylinder banks, and in any configuration that uses multiple cylinder banks such as a V-configuration. The internal combustion engine may be used to power any machine or other device, including locomotive applications, on-highway trucks or vehicles, off-highway trucks or machines, earth moving equipment, generators, aerospace applications, marine applications, pumps, stationary equipment, or other engine powered applications.

Examples of internal combustion engines for the herein disclosed implementation of the gaseous fuel feeding system may include, for example, V-type engines of the series GCM34 manufactured by Caterpillar Motoren GmbH & Co. KG, Kiel, Germany, operated in the range of 450-750 rpm and provide, for example, up to, for example, 600 kW per cylinder.

In the following, modifications that may be applied in combination or alternatively to respective features are discussed.

In some embodiments, respective duct damping orifices delimit first inner volume 126 and second inner volume 146 at first opposing end 124 and second opposing end 144, respectively. Accordingly, the damping element includes those embodiments more than one duct damping orifices. Those duct damping orifices in combination are then configured to provide for the desired damping effect and exchange of gaseous fuel between first inner volume 126 and second inner volume 146.

In some embodiments, the at least one duct damping orifice 152 fluidly connects first inner volume 126 and second inner volume 146 for allowing a flow through of gaseous fuel.

In general, the area of the duct damping orifice 152 may be configured to provide for peak pressure damping via a gaseous fuel exchange with respective inner volume 126, 146 at the other side of duct damping orifice 152.

In some embodiments, duct damping element 150 is located in the middle of the loop line configuration symmetrically between the first duct line and the second duct line, e.g. opposite to the gaseous fuel inlet port 110 as shown in Fig. 4.

In some embodiments, the at least one duct damping orifice 152 fluidly connects first inner volume 126 and second inner volume 146 for exchanging gaseous fuel and generally for allowing a flow through of gaseous fuel.

As the duct damping element, also the brach damping element may be integrally formed as part of the branch line. In some embodiments, the branch damping element may be a separate unit fluidly connected to the respective branch line.

In some embodiments, the branch damping element may be positioned at the entrance of the branch line or at the end of the branch line, e.g. between the branch line and the gas admission valve.

As the duct damping element, the branch damping element may comprise one or more orifices within a plane. In the later case, the combined opening area is configured to provide for the desired damping. Similarly, one or more orifices may be positioned along the flow to provide for the damping.

Finally, it is assumed that the effect on pressure fluctuations increases with increasing the cylinder number of the internal combustion engine. In particular, the disclosed gaseous fuel feeding system may be applied in large internal combustion engines with 8, 9, or even 10 cylinders per cylinder banck.

Although herein, the duct damping element and the branch damping element are disclosed in common embodiments, each of the duct damping element and the branch damping element may itself provide for the desired damping. As such the configurations are to be considered separately applicable. However, their use in combination may result in synergy effects that-for specific conditions - may provide for the desired damping effects.

Although the preferred embodiments of this invention have been described herein, improvements and modifications may be incorporated without departing from the scope of the following claims.

## Claims

1. A gaseous fuel feeding system (100) for feeding a first cylinder bank (12) and a second cylinder bank (14) of an internal combustion engine (10) with gaseous fuel, the gaseous fuel feeding system (100) comprising:
for feeding the first cylinder bank (12), a first duct line (120) comprising a first inner volume (126) extending from a first inlet end (110) for receiving gaseous fuel to a first opposing end (124) of the first duct line (120); and
for feeding the second cylinder bank (14), a second duct line (140) comprising a second inner volume (146) extending from a second inlet end (110) for receiving gaseous fuel to a second opposing end (144) of the second duct line (140), and
a duct damping element (150) having at least one duct damping orifice (152) and fluidly connecting the first inner volume (126) of the first duct line (120) and the second inner volume (146) of the second duct line (140).

2. The gaseous fuel feeding system (100) of claim 1, wherein the same duct damping element (150), for example, the same peak pressure damping orifice (152) delimits the first inner volume (126) and the second inner volume (146) at the first opposing end (124) and the second opposing end (144), respectively, or wherein respective duct damping elements delimit the first inner volume (126) and the second inner volume (146) at the first opposing end (124) and the second opposing end (144), respectively.

3. The gaseous fuel feeding system (100) of claim 1 of claim 2, wherein the at least one duct damping orifice (152) fluidly connects the first inner volume (126) and the second inner volume (146) for allowing a flow through of gaseous fuel; and/or
wherein an area of the duct damping orifice (152) is configured to provide for peak pressure and pressure fluctuation damping via a gaseous fuel exchange with the respective inner volume (126, 146) at the other side of the duct damping orifice (152); and/or
wherein an area of the duct damping orifice (152) is adapted to the size of the respective first and second inner volumes (126, 146).

4. The gaseous fuel feeding system (100) of any one of the preceding claims, wherein the first duct line (120) and/or the second duct line (140) have a circular cross section with a duct line diameter (Df) and the duct damping orifice (152) is circular with a damping orifice diameter (Ddf) in the range from 5 % to 50 %, for example, in the range from 15 % to 25 % such as 19%, 20 %, 21 %, or 22 % of the duct line diameter (Df).

5. The gaseous fuel feeding system (100) of any one of the preceding claims, wherein the first duct line (120) and the second duct line (140) are configured in a loop line configuration with a gaseous fuel inlet port (110) and the duct damping element (150) is located in the middle of the loop line configuration symmetrically between the first duct line and the second duct line opposite to the gaseous fuel inlet port (110).

6. The gaseous fuel feeding system (100) of any one of the preceding claims, wherein an area of the at least one duct damping orifice (152) is in the range from 0.2 % to 25 %, for example, in the range from 2 % to 6 % such as 3.5 %, 4 %, 4.5 %, or 5 % of the cross section area of the first and/or second duct line (120, 140).

7. The gaseous fuel feeding system (100) of any one of the preceding claims, wherein the first duct line (120) and the second duct line (140) each comprise a plurality of branch lines (122, 142) that each are configured to fluidly connect the respective inner volume (126, 146) with a respective gas admission valve (34) of the respective cylinder bank (12, 14).

8. The gaseous fuel feeding system (100) of any one of the preceding claims, further comprising, for at least one branch inlet line of the pluralities of branch lines (122, 142), a branch damping element (170) with a branch inlet orifice (172), wherein the branch inlet orifice (172) fluidly connects the respective first or second inner volume (126, 146) to a branch inner volume (174) of the respective branch line (122, 142).

9. The gaseous fuel feeding system (100) of any one of the preceding claims, wherein the first duct line (120) and/or the second duct line (140) have a circular cross section with a duct line diameter (Df) and at least one branch inlet line of the pluralities of branch lines (122, 142) has a circular cross section with a branch line diameter (Db) in the range from 45 % to 75 %, for example, in the range from 50 % to 65 % such as 54 %, 55 %, 56 %, or 57 % of the duct line diameter (Df).

10. The gaseous fuel feeding system (100) of any one of the preceding claims, wherein the area of the branch inlet orifice (172) is in the range from 2 % to 45 %, for example, in the range from 6 % to 25 % such as 11 %, 12 %, 13 %, or 14 % of the cross section area of the respective branch line (122, 142); and/or
wherein at least one branch line of the pluralities of branch lines (122, 142) has a circular cross section with a branch line diameter (Db) and the branch inlet orifice is circular with a branch inlet orifice diameter (Ddb) in the range from 15 % to 65 %, for example, in the range from 25 % to 50 % such as 34 %, 35 %, 36 %, or 37 % of the branch line diameter (Db).

11. The gaseous fuel feeding system (100) of any one of the preceding claims, wherein the first duct line (120) and the second duct line (140) are configured to receive gaseous fuel from a common gaseous fuel supply system at the first inlet end (110) and the second inlet end (110), respectively; and/or
wherein the gaseous fuel feeding system (100) further comprises an ignition gaseous fuel system (200) for feeding respective pre-combustion chambers (36) of the first cylinder bank (12) and the second cylinder bank (14) with gaseous fuel, and, for example, the ignition gaseous fuel system (200) is configured to receive gaseous fuel from the common gaseous fuel supply system.

12. An internal combustion engine (10) for operation with gaseous fuel comprising:
a first cylinder bank (12) and a second cylinder bank (14),
a gaseous fuel supply system, and
a gaseous fuel feeding system (100) according to any one of the preceding claims for feeding gaseous fuel from the gaseous fuel supply system to the first cylinder bank (12) and the second cylinder bank (14).

13. The internal combustion engine (10) of claim 12, wherein the internal combustion engine is configured to be operated
as a spark-ignited engine comprising an ignition gaseous fuel system (200) feeding cylinder respective pre-combustion chambers (36);
as a dual fuel engine for gaseous and liquid fuel operation, wherein the gaseous fuel operation is ignited via liquid fuel injection; or
as a ignition fuel ignited engine.

14. The internal combustion engine (10) of claim 12, wherein the first cylinder bank (12) and the second cylinder bank (14) are arranged in V-configuration.

15. A gaseous fuel feeding system (100) for feeding at least one cylinder bank (12, 14) of an internal combustion engine (10) with gaseous fuel, the gaseous fuel feeding system (100) comprising:
for feeding the cylinder bank (12, 14), a duct line (120, 140) comprising an inner volume (126, 146) extending from a first inlet end (110) for receiving gaseous fuel to an opposing end (124, 144) of the duct line (120,140);
a plurality of branch lines (122, 142) that each are configured to fluidly connect the inner volume (126, 146) with a respective gas admission valve (34) of the cylinder bank (12, 14); and
at least one branch damping element (170) with a branch inlet orifice (172), wherein the branch inlet orifice (172) fluidly connects the respective inner volume (126, 146) to a branch inner volume (174) of the at least one branch line (122, 142).
